# EUROPÄISCHE PATENTSCHRIFT

(11) **EP 2 520 360 B1**
(45) Veröffentlichungstag und Bekanntmachung des Hinweises auf die Patenterteilung: **16.07.2014**
(21) Anmeldenummer: 12158027.8
(22) Anmeldetag: 05.03.2012
(51) Int. Cl.: A61C 9/00, B01F 7/00, B01F 13/00, B01F 15/00, B01F 15/02, B05C 17/005, B01F 5/06

(54) **Mischer zum Mischen von mindestens zwei fliessfähigen Komponenten sowie Austragsvorrichtung**
Mixer for mixing at least two flowable components, and application device
Mélangeur destiné à mélanger au moins deux composants pouvant s'écouler ainsi que dispositif de sortie

(30) Priorität: 02.05.2011 EP 11164431
(43) Veröffentlichungstag der Anmeldung: 07.11.2012
(73) Patentinhaber: Sulzer Mixpac AG, 9469 Haag (CH)
(72) Erfinder: Hiemer, Andreas, 8862 Schübelbach (CH)
(74) Vertreter: Manitz, Finsterwald & Partner GbR

(56) Entgegenhaltungen:
- WO-A1-00/21653
- DE-A1- 4 316 807
- DE-A1- 4 335 970
- DE-B3-102007 018 143
- NL-A- 9 200 318
- US-A- 2 587 683
- US-A- 4 174 868

## Beschreibung

Die Erfindung betrifft einen Mischer zum Mischen von mindestens zwei fliessfähigen Komponenten sowie eine Austragsvorrichtung gemäss dem Oberbegriff des jeweiligen unabhängigen Patentanspruchs.

Statische oder dynamische Mischer zum Mischen von mindestens zwei Komponenten werden in vielen technischen Gebieten eingesetzt beispielsweise beim Mischen von Zweikomponenten-Systemen wie beispielsweise Dichtmassen, Zweikomponenten-Schäume, oder Zweikomponenten-Klebstoffe oder auch im Dentalbereich beispielsweise zum Mischen von Abformmassen. Üblicherweise müssen die einzelnen Komponenten bis zur Anwendung voneinander getrennt bleiben und werden dann durchmischt, sodass es anschliessend durch eine chemische Reaktion zum Aushärten kommt. Solche Mischer sind in der Regel für den Einmalgebrauch ausgelegt, weil sie nach Aushärtung oder sonstiger Reaktion der Komponenten praktisch nicht mehr gereinigt werden können.

Solche Mischer sind üblicherweise Teil einer Austragsvorrichtung, die Kartuschen oder sonstige Kammern für die jeweiligen Komponenten umfassen. Bei der Anwendung werden die einzelnen Komponenten mittels eines Stössels oder eines antreibbaren Kolbens aus der Kammer ausgetragen, gelangen in den Mischer, werden dort innig durchmischt und verlassen den Mischer durch seine Austrittsöffnung als homogen durchmischte Masse. Bezüglich der Kammern für die Komponenten gibt es viel verschiedene Ausgestaltungen. Die Kammern können beispielsweise als starre Kartuschen ausgestaltet sein, welche direkt in die Austragsvorrichtung eingelegt werden. Dabei können die Kartuschen beispielsweise jeweils als Boden einen Kolben aufweisen, der durch Druckbeaufschlagung in der Kartusche bewegt wird, um die jeweilige Komponente auszutragen. Auch sind Ausgestaltungen bekannt bei denen die Kartuschen sehr dünnwandig sind. Diese werden dann in Stützkartuschen der Austragsvorrichtung eingelegt und dort mit einem Stössel oder einem Kolben druckbeaufschlagt. Hierbei kann es vorgesehen sein, dass die dünnwandige Kartusche beim Austragen in der Stützkartusche kollabiert. Ferner ist es bekannt, dass die Kammern für die Komponenten jeweils als Schlauchbeutel ausgestaltet sind, die dann in Stützkartuschen eingelegt werden und für die Anwendung durch Druckbeaufschlagung komprimiert werden.

Für die Lagerung der einzelnen Komponenten ist es in der Regel notwendig, dass diese in vollständig geschlossenen Kammern gelagert werden, um ein unerwünschtes Reagieren mit Luft oder ihren Bestandteilen, ein Austrocknen oder eine sonstige Degradation zu vermeiden. Insbesondere bei Schlauchbeuteln oder dünnwandigen Kartuschen als Kammern für die Komponenten will man dabei oft auf aufwendige Verschlusseinrichtungen für die Kammern verzichten. Daher ist es eine weit verbreitete Massnahme, dass die jeweilige Kammer, also beispielsweise die Kartusche oder der Schlauchbeutel, vor der ersten Anwendung aufgestochen wird, sodass anschliessend die entsprechende Komponente ausgetragen werden kann.

Es sind Systeme bekannt, bei welchen einen Adapter auf die Kartusche oder eine Halterung für die Schlauchbeutel aufgesetzt wird, der eine Aufstecheinrichtung umfasst, wobei für den Adapter zwei Positionen vorgesehen sind, eine, bei welcher die Aufstecheinrichtung für die Lagerung und den Transport von der Kartusche bzw. dem Beutel ferngehalten wird, und eine zweite, bei welcher die Aufstecheinrichtung in die Kartusche eindringt, sie aufsticht und so die Komponente für das Austragen freigibt.

Nachteilig hieran ist, dass der Adapter Teil des Einwegsystems ist und daher entsorgt werden muss. Auch sind in der Regel spezielle Verriegelungen notwendig, um ein unbeabsichtigtes Aufstechen zu vermeiden.

Andere Ausführungsformen haben die Aufstecheinrichtung direkt an der Halterung für die Kartusche bzw. den Schlauchbeutel angebracht. Wird die Kartusche bzw. der Schlauchbeutel eingelegt und mit Druck beaufschlagt, so erfolgt das Durchstechen der Wandung dadurch, dass diese gegen die Aufstecheinrichtung gepresst und dadurch aufgeschnitten wird. Dieses System ist nicht immer zuverlässig und bedarf in der Regel grosse Sorgfalt bei der Lagerung, dem Transport und der Handhabung damit die Kartusche bzw. der Schlauchbeutel nicht unbeabsichtigt aufgestochen werden.

Auch sind solche System bekannt, beispielsweise aus der DE-A-196 18-693 A1, bei welchen die Aufstecheinrichtungen an den Einlasskanälen des Mischers vorgesehen sind, wozu diese als schräg abgeschnittene Rohrenden ausgeführt sind, welche beim Aufsetzen des Mischers jeweils in einen Auslass einer Kammer eingreifen und dabei die Wandung der Kammer durchstossen. Bei dieser Ausführungsform kann es jedoch vorkommen, dass sich die eingestochene Wandung vor die Eintrittsöffnung der Einlasskanäle legt und diese zumindest teilweise abdeckt, wodurch das Austragen der Komponente negativ beeinflusst wird. Dies könnte gegebenenfalls durch eine grosse Eindringtiefe des Einlasskanals in die Kartusche bzw. in den Schlauchbeutel verhindert werden, aber dadurch wird das vollständige Austragen der Komponenten aus der Kartuschen bzw. den Schlauchbeuteln unmöglich, was zu unwirtschaftlichen Restmengen führt.

Ergänzend wird noch auf die WO 00/21653 A1 verwiesen.

Ausgehend von diesem Stand der Technik ist es daher eine Aufgabe der Erfindung, einen Mischer und eine Austragsvorrichtung für mindestens zwei fliessfähige Komponenten vorzuschlagen, welche diese Nachteile nicht aufweisen. Ein problemloses sicheres Lagern und Transportieren soll möglich sein, die Handhabung des Systems soll einfach sein und eine Behinderung des Austragens der Komponente durch die aufgestochene Wandung soll weitgehend vermieden werden.

Die diese Aufgabe lösenden Gegenstände der Erfindung sind durch die Merkmale der jeweiligen unabhängigen Patentansprüche gekennzeichnet.

Erfindungsgemäss wird also ein Mischer zum Mischen von mindestens zwei fliessfähigen Komponenten vorgeschlagen mit einem Mischergehäuse, das eine Austrittsöffnung für die Komponenten aufweist, mit mindestens einem in dem Mischergehäuse angeordneten Mischelement zum Durchmischen der Komponenten, mit mindestens zwei separaten Einlasskanälen, durch welche die Komponenten voneinander getrennt in den Bereich des Mischelements einbringbar sind, wobei jeder Einlasskanal zum dichtenden Zusammenwirken mit jeweils einem Auslasskanal eines Vorratsbehälters oder einer Kammer ausgestaltet ist, und wobei mindestens einer der Einlasskanäle an seinem für das Zusammenwirken mit dem Auslasskanal bestimmten Ende als Durchstechelement zum Öffnen einer Strömungsverbindung zwischen dem Vorratsbehälter oder der Kammer und diesem Einlasskanal ausgestaltet ist. Das Durchstechelement umfasst mindestens zwei Einströmflächen für die Komponenten, wobei die beiden Einströmflächen relativ zueinander geneigt sind.

Dadurch, dass das Durchstechelement an den Einlasskanal des Mischers angeformt ist, kann die Wandung bzw. die Versiegelung der Kammern für die Komponente in dem Vorratsbehälter erst dann durchstossen werden, wenn der Mischer mit dem Vorratsbehälter verbunden wird, was üblicherweise erst unmittelbar vor der Anwendung erfolgt. Durch diese Massnahme ist ein sicherer Transport, eine sichere Lagerung und eine einfache Handhabung gewährleistet. Da zudem das Durchstechelement mindestens zwei zueinander geneigte Einströmflächen umfasst, wird wirkungsvoll verhindert, dass der Eingang des Einlasskanals durch die durchstochene Wandung bzw. Folie verdeckt bzw. verstopft wird. Hierdurch wird ein unbehindertes Austragen der jeweiligen Komponente ermöglicht.

Vorteilhafterweise ist die Summe aller Einströmflächen eines Einlasskanals grösser ist als die Querschnittsfläche dieses Einlasskanals senkrecht zu seiner Längsachse, denn durch diese grosse Gesamteinströmfläche lässt sich die Komponente besonders gut austragen.

Um jeden Einlasskanal, der ein Durchstechelement aufweist, für die Komponente durchströmbar zu machen, ist dieser vorzugsweise als Hohlkörper ausgestaltet, speziell bevorzugt ist der Einlasskanal im Wesentlichen als zylindrische Röhre ausgestaltet.

Um ein möglichst leichtes Durchstechen der Wandung bzw. der Versiegelung der Kammer für die Komponente zu ermöglichen ist es bevorzugt, dass das Durchstechelement mindestens eine Spitze umfasst.

Gemäss einer ersten bevorzugten Ausführungsform berühren sich die beiden Einströmflächen an einer gemeinsamen Verbindungslinie.

Bei einer anderen bevorzugten Ausführungsform sind die beiden Einströmflächen durch einen Steg getrennt.

Vorzugsweise erstreckt sich der Steg senkrecht zur Längsachse des Einlasskanals.

Da dieser Steg eine besonders stabile Struktur darstellt, ist es vorteilhaft wenn der Steg mindestens eine Spitze aufweist.

Der Mischer kann als dynamischer Mischer mit einem rotierbarem Mischelement ausgestaltet sein, das heisst zum Durchmischen der Komponenten wird das Mischelement rotiert. Natürlich kann der Mischer auch in an sich bekannter Weise als statischer Mischer ausgestaltet sein, das heisst, das Mischelement oder die Mischelemente bewegen sich nicht, sondern die Durchmischung der Komponenten erfolgt durch ein mehrfaches Auftrennen der Komponentenströme in Teilströme und ein mehrfaches Vereinigen dieser Teilströme, wobei hier die Mischenergie nur aus den strömenden Komponenten stammt.

Gemäss einer Ausführungsform weist bei dem Mischer genau ein Einlasskanal ein Durchstechelement auf, der oder die anderen Einlasskanäle sind ohne Durchstechelement ausgestaltet.

Durch die Erfindung wird ferner eine Austragsvorrichtung zum Austragen von mindestens zwei fliessfähigen Komponenten vorgeschlagen, mit einem Vorratsbehälter zur Aufnahme von jeweils einer Kammer für jede Komponente, wobei der Vorratsbehälter mindestens einen Auslasskanal für eine der Komponenten aufweist sowie mit einem Mischer zum Mischen der Komponenten. Der Mischer ist erfindungsgemäss ausgestaltet.

Bei einem Ausführungsbeispiel weist der Vorratsbehälter ein Schulterteil auf, welches jeweils ein Ende der Kammern aufnimmt, wobei der mindestens eine Auslasskanal an dem Schulterteil vorgesehen ist und als Stutzen auf der den Kammern abgewandten Seite des Schulterteils hervorsteht, wobei der mit dem Durchstechelement versehene Einlasskanal des Mischers in den mindestens einen Auslasskanal des Schulterteils eingreift und so bemessen sind, dass jedes Durchstosselement im Betriebszustand bis zu einer Eindringtiefe in die Kammer vordringen kann.

Um ein möglichst vollständiges Entleeren der Kammern zu ermöglichen, beträgt die Eindringtiefe höchstens 50% vorzugsweise höchstens 33% der inneren Ausdehnung des Einlasskanals.

Vorzugsweise ist mindestens eine Kammer, nämlich die, in welche das Durchstosselement vordringt, als Schlauchbeutel ausgestaltet, dessen Wandung von dem Durchstosselement durchstossbar ist. Es ist aber auch möglich, dass die Kammer als Kartusche, insbesondere als dünnwandige oder kollabierbare Kartusche ausgestaltet ist. Ferner ist es möglich, dass die Kammer eine Verschlussmembran oder -folie aufweist, sodass das Durchstosselement nicht die Wandung der Kammer sondern diese Verschlussstelle durchstösst.

Die Austragsvorrichtung hat vorzugsweise mindestens einem Kolben oder mindestens einen Stössel zum Austragen der Komponenten aus den Kammern.

Im Hinblick auf eine besonders einfache und kostengünstige Herstellung ist es vorteilhaft, wenn das Mischergehäuse und das Mischelement spritzgegossen sind, vorzugsweise aus einem Thermoplast.

Weiter vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der schematischen Zeichnung zeigen teilweise im Schnitt:
- Fig. 1:: eine perspektivische teilweise schematische Explosionsdarstellung eines Ausführungsbeispiels einer erfindungsgemässen Austragsvorrichtung,
- Fig. 2:: eine Schnittdarstellung des Ausführungsbeispiels aus Fig. 1, und
- Fig. 3 - 9:: jeweils eine perspektivische Darstellung des Einlasskanals von Ausführungsbeispielen des erfindungsgemässen Mischers.

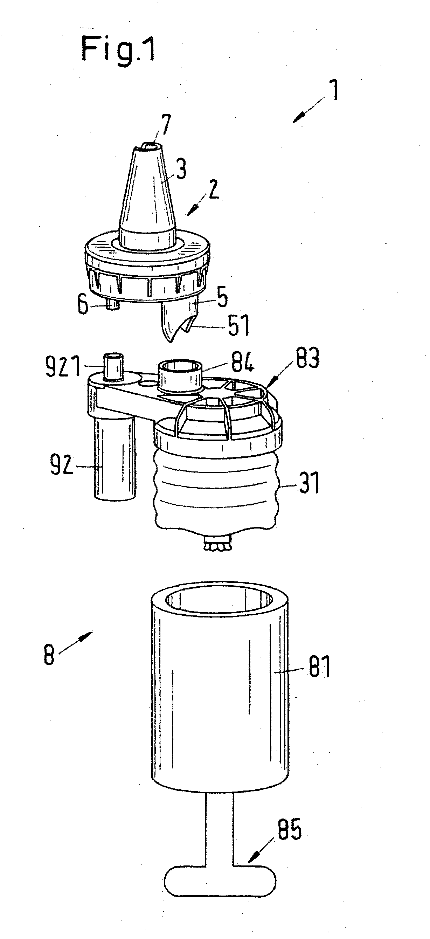

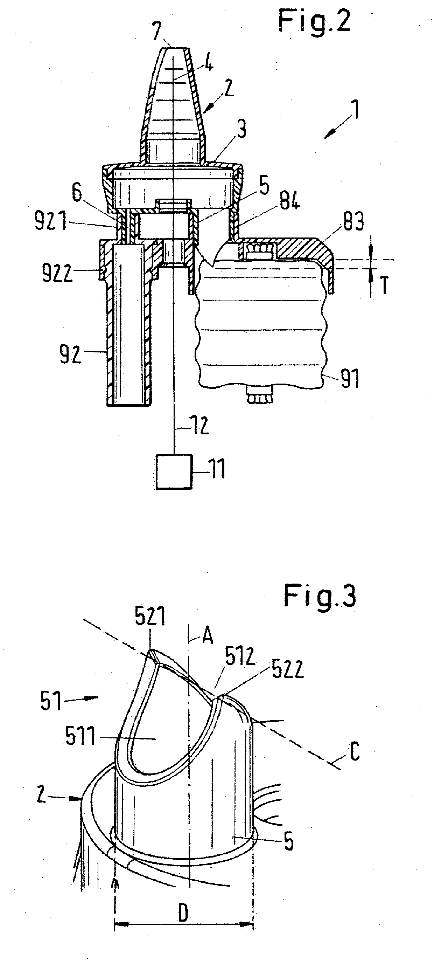

Fig. 1 zeigt einen perspektivische teilweise schematische Explosionsdarstellung wesentliche Teile eines Ausführungsbeispiels einer erfindungsgemässen Austragsvorrichtung, die gesamthaft mit dem Bezugszeichen 1 bezeichnet ist und ein Ausführungsbeispiel eines erfindungsgemässen Mischers umfasst, der gesamthaft mit dem Bezugszeichen 2 bezeichnet ist. Fig. 2 zeigt das Ausführungsbeispiel in einer teilweise schematischen Längsschnittdarstellung. Dieses Ausführungsbeispiel ist für das Austragen bzw. Mischen von zwei fliessfähigen Komponenten ausgestaltet. Es versteht sich, dass die Austragsvorrichtung 1 bzw. der Mischer 2 auch für mehr als zwei fliessfähige Komponenten ausgestaltet sein kann.

Der Mischer 2, der hier als dynamischer Mischer ausgestaltet ist, umfasst ein Mischergehäuse 3, in welchem mindestens ein Mischelement 4 vorgesehen ist, das in Fig. 2 nur schematisch angedeutet ist. Dieses Mischelement 4 dient zum Durchmischen der Komponenten. Der Mischer 2 umfasst zwei separate Einlasskanäle, nämlich einen ersten Einlasskanal 5 und einen zweiten Einlasskanal 6, durch welche die Komponenten voneinander getrennt in den Mischer 2 eingebracht werden können und jeweils in den Bereich des Mischelements 4 gelangen, welches dann die beiden Komponenten innig durchmischt. Schliesslich treten die durchmischten Komponenten durch eine Austrittsöffnung 7 des Mischers 2 aus und können appliziert werden.

Die zu durchmischenden Komponenten sind jeweils in einer Kammer 91, 92 vorgesehen, in denen die Komponenten gelagert und transportiert werden. Als Kammern 91 ,92 für die Komponenten sind prinzipiell alle an sich bekannten Varianten geeignet. So können die Kammern 91,92 jeweils als stabile stehfähige Kartusche ausgestaltet sein, die auch bei der Entleerung ihre äussere Form beibehalten. Dabei kann der Kartuschenboden von einem Kolben gebildet werden, der in an sich bekannter Weise zum Entleeren der Kartusche mittels eines Stössels in Längsrichtung einwärts in die Kartusche bewegt wird. Auch können die Kammern 91,92 durch dünnwandige Kartuschen realisiert werden, die in an sich bekannter Weise in Stützkartuschen eingelegt werden und beispielsweise zum Austragen kollabierbar sind. Dieses Kollabieren kann beispielsweise ähnlich wie bei einem Balg funktionieren. Ferner ist es möglich, dass die Kammern 91, 92 als Schlauchbeutel ausgestaltet sind, die dann zum Austragen in einer Stützkartusche komprimiert werden. Natürlich sind auch alle Kombinationen dieser Ausgestaltungen für die Kammern 91, 92 möglich.

Bei dem hier dargestellten Ausführungsbeispiel ist die erste Kammer 91 für die erste Komponente als Schlauchbeutel ausgestaltet und die zweite Kammer 92 für die zweite Komponente als dickwandige - im Sinne von nicht kollabierbar - Kartusche.

Die Austragsvorrichtung 1 umfasst ferner einen Vorratsbehälter 8, der die beiden Kammern 91 und 92 aufnimmt. Bei diesem Ausführungsbeispiel umfasst der Vorratsbehälter 8 eine Stützkartusche 81 (in Fig. 2 nicht dargestellt), in welche die als Schlauchbeutel ausgestaltete Kammer 91 für die erste Komponente eingelegt wird. Da die zweite Kammer 92 hier als starre Kartusche ausgestaltet ist, benötigt sie keine Stützkartusche und kann beispielsweise in eine nicht dargestellte Führung des Vorratsbehälters 8 eingelegt werden.

Der Vorratsbehälter 8 umfasst ferner ein Schulterteil 83, welches jeweils ein Ende der Kammern 91, 92 aufnimmt. Ferner ist an dem Schulterteil 83 ein Auslasskanal 84 vorgesehen, der als Stutzen auf der den Kammern 91, 92 abgewandten Seite des Schulterteils 84 hervorsteht. Das Schulterteil 83 wird vorzugsweise in einem Spritzgiessverfahren hergestellt.

Bei dem hier beschriebenen Ausführungsbeispiel ist die Kammer 92 für die zweite Komponente als Kartusche ausgestaltet, die mit einem Auslassstutzen 921 versehen ist, welcher als Auslasskanal für die zweite Komponente dient. Der Auslassstutzen ist beispielsweise für die Lagerung und den Transport mit einer Verschlusskappe versehen, welche entfernt, beispielsweise weg gebrochen wird, bevor die als Kartusche ausgebildete Kammer 92 in den Vorratsbehälter 8 eingelegt wird. Durch eine Öffnung im Schulterteil 83 ragt dann der Auslassstutzen 921 achsparallel zu dem Auslasskanal 84 hervor und kann einen der Einlasskanäle 6 des Mischers 2 aufnehmen.

Natürlich ist es auch möglich, dass die zweite Komponente ebenfalls in einem Schlauchbeutel vorgesehen ist. Es versteht sich, dass in solchen Fällen ein zweiter Auslasskanal an dem Schulterteil 83 vorgesehen ist, welcher den Auslassstutzen 921 ersetzt.

Zum Austragen der Komponenten umfasst die Austragsvorrichtung 1 einen Kolben oder einen Stössel 85, der in Fig. 1 nur für die erste Komponente in der Stützkartusche 81 angedeutet ist. Es versteht sich, dass in sinngemäss gleicher Weise auch für die zweite Kammer 92 ein solcher Kolben oder Stempel vorgesehen ist. Dabei ist es möglich, dass der Kolben Bestandteil der ersten oder der zweiten Kammer 91 oder 92 ist - beispielsweise in die Kartusche , welche die zweite Kammer 92 bildet, integriert ist. Auch kann der Kolben in die Stützkartusche 81 integriert sein. Diese Kolben werden dann zum Austragen der Komponenten darstellungsgemäss nach oben bewegt, wobei die Vorwärtsbewegung durch den Stössel 85 verursacht wird, der händisch oder maschinell angetrieben wird.

Im Falle eines dynamischen Mischers 2 - wie in dem hier beschriebenen Ausführungsbeispiel - umfasst die Austragsvorrichtung 1 einen Antrieb 11 (Fig. 2), welcher über eine Welle 12 das Mischelement 4 des Mischers 2 in Rotation versetzt. Die Welle 12 erstreckt sich zwischen den beiden Kammern 91, 92 durch eine Öffnung im Schulterteil 83 bis in den Mischer 2.

Erfindungsgemäss ist mindestens einer der Einlasskanäle, hier der erste Einlasskanal 5 an seinem für das Zusammenwirken mit dem Auslasskanal 84 bestimmten Ende als Durchstechelement 51 ausgestaltet, das zum Öffnen einer Strömungsverbindung zwischen der ersten Kammer 91 und diesem ersten Einlasskanal 5 dient. In Fig. 3 ist der erste Einlasskanal 5 des Ausführungsbeispiels aus Fig.1 und Fig. 2 nochmals perspektivisch dargestellt. Der erste Einlasskanal 5 ist im Wesentlichen als eine zylindrische Röhre mit einem Innendurchmesser D ausgestaltet, deren Ende das Durchstechelement 51 bildet. Erfindungsgemäss weist das Durchstechelement 51 zwei Einströmflächen 511 und 512 auf, die relativ zueinander geneigt sind und durch welche die erste Komponente aus der Kammer 91 in den ersten Einlasskanal 5 einströmen kann.

Bei dem hier beschriebenen Ausführungsbeispiel sind in der Wandung des Einlasskanals 5 zwei Spitzen 521 und 522 vorgesehen, von denen die Wandung auf beiden Seiten schräg zur Längsachse A geschnitten verläuft und zwar auf beiden Seiten der Spitzen 521 und 522 darstellungsgemäss (Fig. 3) abwärts. Die Spitzen 521, 522 liegen sich diametral gegenüber. Die Kontur der Wandung bildet somit auf beiden Seiten der Spitzen 521 und 522 jeweils im Wesentlichen ein U, dessen Schenkel jeweils in den Spitzen 521 und 522 enden. Wie dies am besten aus Fig. 1 ersichtlich ist, sind die Schenkel der beiden U jeweils gekrümmt, derart, dass die von dem U begrenzte Fläche jeweils gewölbt ist.

Die von dem einen U und einer gedachten Verbindungslinie C (Fig. 3) zwischen den Spitzen 521,522 begrenzte Fläche bildet hier die erste Einströmfläche 511, die von dem anderen U und der gedachten Verbindungslinie C begrenzte Fläche bildet die zweite Einströmfläche 512. Die beiden Einströmflächen 511 und 512 verlaufen somit relativ zueinander geneigt und berühren sich an der gedachten Verbindungslinie C. Wie bereits erwähnt, sind die beiden Einströmflächen 511 und 512 jeweils gewölbt, wobei es sich als vorteilhaft erwiesen hat, wenn die eine der Einströmflächen 511, 512 konkav ausgestaltet ist und die andere der beiden Einströmflächen 511, 512 konvex.

Für den Betrieb der erfindungsgemässen Austragsvorrichtung 1 werden zunächst die erste Kammer 91 zusammen mit der Stützkartusche 81 sowie die zweite Kammer 92 in den Vorratsbehälter 8 eingelegt, sodass jeweils ein Ende in dem Schulterteil 83 aufgenommen wird (siehe Fig. 2). Falls vorhanden, wir vorgängig der Verschluss der Kammer 92 entfernt. Die mit dem Auslassstutzen 921 versehene als Kartusche ausgestaltete Kammer 92 wird mittels einer Verrastung 922 im Schulterteil 83 gehalten. Der Vorratsbehälter 8 wird geschlossen und der oder die Stössel 85 bzw. Kolben an dem demSchulterteil 83 abgewandten Ende der Kammern 91, 92 platziert.

Nun wird der Mischer 2 auf das Schulterteil 83 aufgesetzt, dabei greift der erste Einlasskanal 5 in den Auslasskanal 84 ein und der zweite Einlasskanal 6 greift in den Auslassstutzen 921 ein, wobei die Einlasskanäle 5, 6 so ausgestaltet sind, dass sie jeweils dichtend mit dem Auslasskanal 84 bzw. mit dem Auslassstutzen 921 zusammenwirken.

Beim Aufsetzen des Mischers 2 auf das Schulterteil 83 durchstösst das Durchstosselement 51 des ersten Einlasskanals 5 die Wandung der ersten Kammer 91 und dringt bis zu einer Eindringtiefe T in die Kammer 91 ein.

Alternativ ist es möglich, dass auch erst bei einer Druckbeaufschlagung der ersten Kammer 91 mittels des Kolbens oder Stössels 85 die Wandung der Kammer 91 gegen das Durchstosselement gedrückt und von diesem durchdrungen wird.

Aufgrund der beiden relativ zueinander geneigten Einströmflächen 511 und 512 wird es effizient vermieden, dass sich bei dem oder nach dem Durchstossen der Wandung der Kammer 91 oder einer zum Öffnen vorgesehenen Membrane oder Folie in der Kammer 91 Teile der Wandung bzw. der Membrane oder der Folie so vor den ersten Einlasskanal 5 schieben, dass das Austragen der ersten Komponente aus der Kammer 91 wesentlich behindert wird.

Hierbei hat es sich als vorteilhaft erwiesen, wenn die Summe aller Einströmflächen 511, 512 grösser ist als die Querschnittsfläche dieses Einlasskanals 5, welcher hier durch den Innendurchmesser D festgelegt ist. Diese geometrische Bedingung lässt sich insbesondere dadurch realisieren, dass mindestens eine der Einströmflächen 511, 512 schräg und nicht senkrecht zur Längsachse A verläuft.

Die Geometrie des Durchstosselements 51 ermöglicht es auch, dass der Einlasskanal 5 von seiner Länge so bemessen werden kann, dass die maximale Eindringtiefe in die Kammer 91 gering ist. So ist es beispielsweise möglich, die Eindringtiefe T so einzustellen, dass sie höchsten 50% vorzugsweise höchstens 33% der inneren Ausdehnung des Einlasskanals 5 beträgt. Bei dem hier beschriebenen zylindrischen Einlasskanal 5 ist die innere Ausdehnung der Innendurchmersser D. Eine solche geringe Eindringtiefe T ist vorteilhaft, weil dadurch ein möglichst vollständiges Entleeren der Kammer 91 ermöglicht wird.

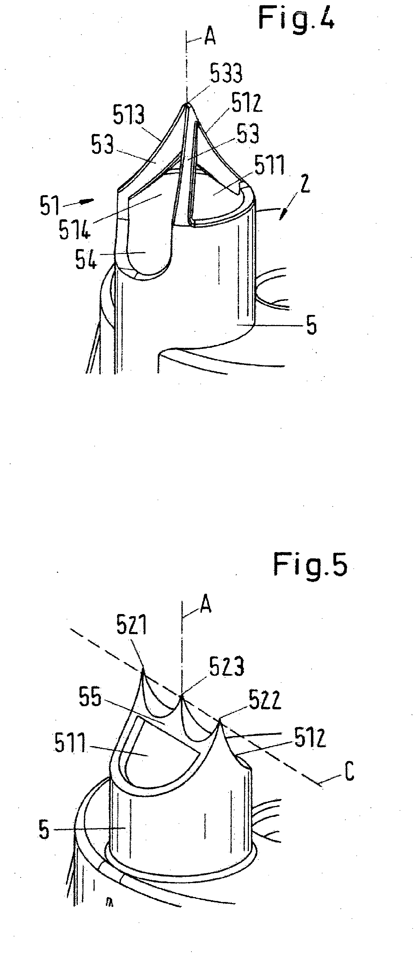

Im Folgenden werden nun anhand der Fig. 4 - 9 mit beispielhaften Charakter weitere vorteilhafte Ausführungsbeispiele für den ersten Einlasskanal 5 bzw. das Durchstosselement 51 erläutert. Dabei werden gleiche oder von der Funktion her gleichwertige Teile mit den gleichen Bezugszeichen bezeichnet wie in Fig. 3. Die Fig. 4 bis Fig. 9 zeigen jeweils eine perspektivische Darstellung des Einlasskanals 5 mit dem Durchstosselement 51.

Bei der Ausgestaltung nach Fig. 4 ist eine zentrale Spitze 523 vorgesehen, welche auf der Längsachse A des Einlasskanals 5 angeordnet ist. Von dieser zentralen Spitze 523 erstrecken sich vier Streben 53 geneigt zur Längsachse A darstellungsgemäss nach unten und enden jeweils auf der senkrecht zur Längsachse geschnittenen Wandung des Einlasskanals 5. Dabei sind die Enden vorzugsweise äquidistant über den Umfang der Wandung verteilt. Zudem ist in der zylindrischen Wandung noch eine U-förmige Ausnehmung 54 vorgesehen. Um den Durchstossvorgang zu erleichtern können die vier Streben 53 bezüglich ihrer jeweiligen Mittelachse jeweils verwunden ausgestaltet sein. Bei dieser Ausführungsform sind vier Einströmflächen 511, 512, 513, 514 jeweils zwischen zwei benachbarten Streben 53 vorgesehen sowie die weitere Einströmfläche 54, welche von der U-förmigen Ausnehmung gebildet wird.

Bei der Ausgestaltung nach Fig. 5 sind ähnlich wie bei der Ausführung nach Fig. 3 in der Wandung des Einlasskanals 5 zwei Spitzen 521 und 522 vorgesehen, die sich diametral gegenüberliegen, und von denen die Wandung des Einlasskanals 5 auf beiden Seiten schräg zur Längsachse A geschnitten verläuft. Die Spitzen 521 und 522 sind jedoch noch spitzer ausgestaltet als bei der Ausführung nach Fig. 3. Zudem sind bei der Ausgestaltung nach Fig. 5 die beiden Spitzen 521 und 522 durch einen Steg 55 verbunden, der sich senkrecht zur Längsachse A erstreckt. Auf diesem Steg 55 ist eine weitere zentrale Spitze 523 vorgesehen, die auf der Längsachse A liegt. Die beiden Einströmflächen 511 und 512 sind bei dieser Ausführungsform durch den Steg 55 voneinander getrennt.

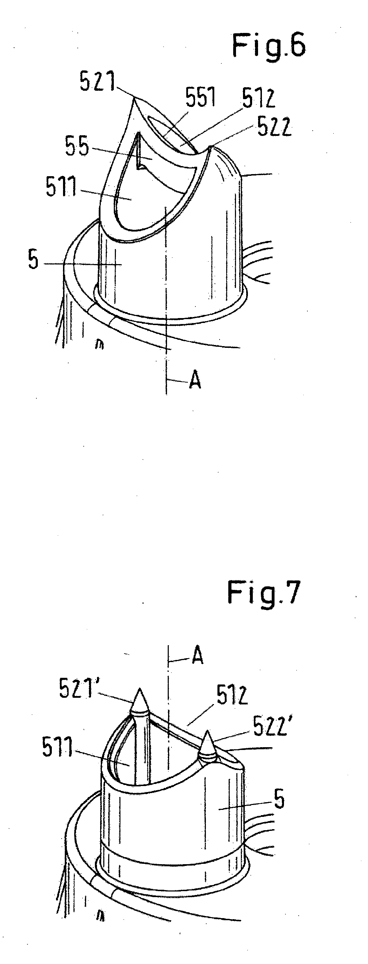

Die Ausführungsform gemäss Fig. 6 ist ähnlich zu der Ausführungsform gemäss Fig. 3, jedoch sind bei der Ausführungsform gemäss Fig. 6 die beiden Spitzen 521 und 523 durch einen Steg 55 verbunden, der hier konkav gekrümmt ausgestaltet ist. Das darstellungsgemäss obere laterale Ende des Stegs 55 verjüngt sich in Richtung der Längsachse A, sodass hier eine Schneide 551 ausgebildet ist.

Die Ausführungsform gemäss Fig. 7 ist auch ähnlich zu der gemäss Fig. 3, jedoch sind bei der Ausführungsform gemäss Fig. 7 die beiden sich diametral gegenüberliegenden Spitzen 521' und 522' jeweils als isolierte Spitzen auf der Wandung des Einlasskanals 5 vorgesehen. Beide Spitzen 521' und 522' sind jeweils als kegelförmige Spitzen 521' und 522' ausgestaltet.

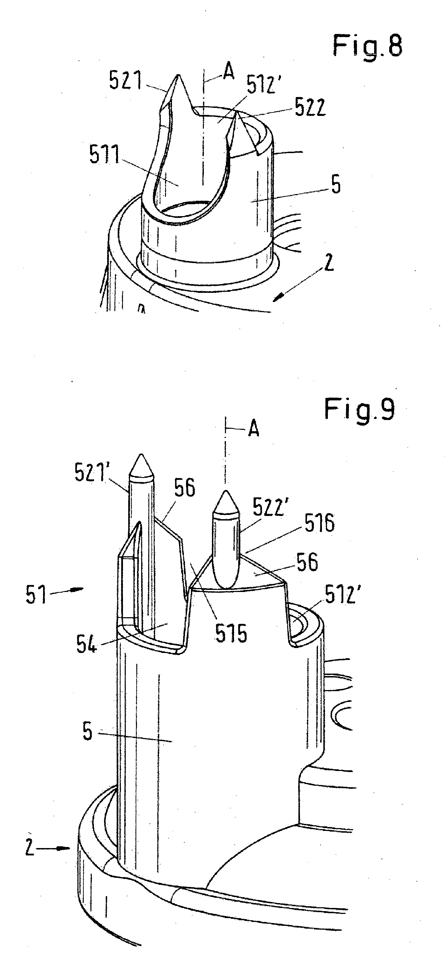

Fig. 8 zeigt eine weiter Ausgestaltung die wiederum ähnlich zu der gemäss Fig. 3 ist. Jedoch ist bei der Ausgestalltung gemäss Fig. 8 die Wandung des Einlasskanals 5 nur auf einer Seite der beiden Spitzen 521 und 522 schräg zur Längsachse A geschnitten, sodass sich hier die U-förmige und gewölbte Einströmfläche 511 ergibt. Auf der anderen Seite der Spitzen 521 und 522 ist die Wandung des Einlasskanals 5 senkrecht zur Längsachse A geschnitten, sodass die zugehörige Einströmfläche 512' im Wesentlichen senkrecht zur Längsachse A liegt. Die lateralen Begrenzungen der beiden Spitzen 521 und 522 sind jeweils schräg geschnitten, sodass jede Spitze 521, 522 zahnähnlich mit einem im wesentlichen dreieckigen Profil ausgestaltet ist.

Fig. 9 zeigt eine Ausgestaltung, bei der ähnlich wie bei der Ausgestaltung gemäss Fig. 7 auf der Wandung des Einlasskanals 5 zwei isolierte Spitzen 521' und 522' vorgesehen sind, die jeweils säulenartig ausgestaltet sind und eine kegelförmige Spitze aufweisen. Zwischen den beiden Säulen 521' und 522' ist auf der einen Seite ein U-förmige Ausnehmung 54 in der Wandung des Einlasskanals 5 vorgesehen, welche eine der Einströmflächen bildet. Auf der anderen Seite zwischen den Beiden Säulen 521' und 522' weist die Wandung des Einlasskanals 5 einen Bereich auf, der senkrecht zur Längsachse A geschnitten ist, sodass von diesem eine Einströmfläche 512' begrenzt wird, die senkrecht zur Längsachse A verläuft. Zudem ist um die Säulen 521' und 522' jeweils ein im Wesentlichen dreieckiger Wandungsabschnitte 56 vorgesehen, der nach innen geneigt verläuft. Durch diese beiden Wandungsabschnitte 56 werden beidseits der beiden Säulen 521' und 522' jeweils eine weitere Einströmfläche 515 und 516 definiert.

Es versteht sich, dass die einzelnen Ausgestaltungsmerkmale, die anhand der Fig. 3-9 erläutert wurden, auch einzeln jeweils untereinander kombinierbar sind.

Bei dem hier beschriebenen Ausführungsbeispiel der Austragsvorrichtung 1 ist auf den Anwendungsfall Bezug genommen, dass nur eine der beiden Komponenten in einer Kammer 91 vorgesehen ist, welche vor der Anwendung mittels des Durchstosselements 51 geöffnet werden muss, während die andere Komponente in einer als Kartusche ausgestalteten Kammer 92 vorliegt, die beispielsweise durch Wegbrechen eines Verschlusses oder Abschrauben einer Kappe geöffnet wird. Dieser Anwendungsfall wird beispielsweise realisiert, wenn in der ersten Kammer 91, die als Schlauchbeutel ausgestaltet ist, ein Klebstoff als erste Komponente vorgesehen ist und die zweite Kammer 92 einen "Booster" als zweite Komponente enthält, der zur rascheren Aushärtung mit dem Klebstoff durchmischt wird.

Es versteht sich, dass die Erfindung natürlich auch für solche Anwendungen geeignet ist, bei denen beide - oder mehr - Komponenten in Kammern vorgesehen sind, die als Schlauchbeutel ausgestaltet sind oder in solchen Kammern, deren Auslass durch eine Membran, eine Folie oder eine andere Art der Versiegelung verschlossen ist. In solchen Fällen ist dann jeder Einlasskanal des Mischers, der mit einer solchen Kammer zusammenwirkt, jeweils an seinem Ende mit einem Durchstosselement 51 versehen.

Auch versteht es sich, dass die an unterschiedlichen Einlasskanälen vorgesehenen Durchstosselemente gleich aber auch verschieden ausgestaltet sein können.

Ferner ist die Erfindung selbstverständlich auch für solche Ausgestaltungen geeignet, bei denen der Mischer 2 als statischer Mischer ausgestaltet ist. Auch bei statischen Mischern können einer oder mehrere Einlasskanäle für die zu durchmischenden Komponenten mit den Durchstosselementen versehen sein.

## Patentansprüche

1. Mischer zum Mischen von mindestens zwei fliessfähigen Komponenten mit einem Mischergehäuse (3), das eine Austrittsöffnung (7) für die Komponenten aufweist, mit mindestens einem in dem Mischergehäuse (3) angeordneten Mischelement (4) zum Durchmischen der Komponenten, mit mindestens zwei separaten Einlasskanälen (5,6), durch welche die Komponenten voneinander getrennt in den Bereich des Mischelements (4) einbringbar sind, wobei jeder Einlasskanal (5;6) zum dichtenden Zusammenwirken mit jeweils einem Auslasskanal (84,921) eines Vorratsbehälters (8) oder einer Kammer (91,92) ausgestaltet ist, und wobei mindestens einer der Einlasskanäle (5) an seinem für das Zusammenwirken mit dem Auslasskanal (84) bestimmten Ende als Durchstechelement (51) zum Öffnen einer Strömungsverbindung zwischen dem Vorratsbehälter (8) oder der Kammer (91,92) und diesem Einlasskanal (5) ausgestaltet ist, **dadurch gekennzeichnet, dass** das Durchstechelement (51) mindestens zwei Einströmflächen (511,512,512',513,514,515,516,54) für die Komponente umfasst, wobei die beiden Einströmflächen (511,512,512',513,514,515,516,54) relativ zueinander geneigt sind.

2. Mischer nach Anspruch 1, bei welchem die Summe aller Einströmflächen (511,512,512',513,514,515,516,54) eines Einlasskanals (5) grösser ist als die Querschnittsfläche dieses Einlasskanals (5) senkrecht zu seiner Längsachse (A).

3. Mischer nach Anspruch 1 oder 2, bei welchem jeder Einlasskanal (5), der ein Durchstechelement (51) aufweist, im Wesentlichen als zylindrische Röhre ausgestaltet ist.

4. Mischer nach einem der vorangehenden Ansprüche, bei welchem das Durchstechelement (51) mindestens eine Spitze (521,522,523,521',522') umfasst.

5. Mischer nach einem der vorangehenden Ansprüche, bei welchem sich die beiden Einströmflächen (511,512,54, 515,516) an einer gemeinsamen Verbindungslinie (C) berühren.

6. Mischer nach einem der Ansprüche 1-4, bei welchem die beiden Einströmflächen (511,512) durch einen Steg (55) getrennt sind.

7. Mischer nach Anspruch 6, bei welchem sich der Steg (55) senkrecht zur Längsachse (A) des Einlasskanals (5) erstreckt.

8. Mischer nach einem der Ansprüche 6 oder 7, bei welcher der Steg (55) mindestens eine Spitze (523) aufweist.

9. Mischer nach einem der vorangehenden Ansprüche, welcher als dynamischer Mischer mit einem rotierbarem Mischelement (4) ausgestaltet ist.

10. Mischer nach eine der vorangehenden Ansprüche bei welchem genau ein Einlasskanal (5) ein Durchstechelement (51) aufweist.

11. Austragsvorrichtung zum Austragen von mindestens zwei fliessfähigen Komponenten mit einem Vorratsbehälter (8) zur Aufnahme von jeweils einer Kammer (91,92) für jede Komponente, wobei der Vorratsbehälter (8) mindestens einen Auslasskanal (84) für eine der Komponenten aufweist sowie mit einem Mischer (2) zum Mischen der Komponenten, **dadurch gekennzeichnet, dass** der Mischer (2) gemäss einem der vorangehenden Ansprüche ausgestaltet ist.

12. Austragsvorrichtung nach Anspruch 11, wobei der Vorratsbehälter (8) ein Schulterteil (83) aufweist, welches jeweils ein Ende der Kammern (91,92) aufnimmt, wobei der mindestens eine Auslasskanal (84) an dem Schulterteil (83) vorgesehen ist und als Stutzen auf der den Kammern (91,92) abgewandten Seite des Schulterteils (83) hervorsteht, wobei der mit dem Durchstechelement (51) versehene Einlasskanal (5) des Mischers (2) in den mindestens einen Auslasskanal (84) des Schulterteils eingreift und so bemessen ist, dass jedes Durchstosselement (51) im Betriebszustand bis zu einer Eindringtiefe (T) in die Kammer (91) vordringen kann.

13. Austragsvorrichtung nach Anspruch 12, bei welchem die Eindringtiefe (T) höchstens 50% vorzugsweise höchstens 33% der inneren Ausdehnung des Einlasskanals (D) beträgt.

14. Austragsvorrichtung nach einem der Ansprüche 11-13, bei welcher mindestens eine Kammer (91) als Schlauchbeutel ausgestaltet ist, dessen Wandung von dem Durchstosselement (51) durchstossbar ist.

15. Austragsvorrichtung nach einem der Ansprüche 11-14, mit mindestens einem Kolben (85) oder mit mindestens einem Stössel (85) zum Austragen der Komponenten aus den Kammern.

## Claims

1. A mixer for mixing at least two flowable components having a mixer housing (3) which has an outlet opening (7) for the components, having at least one mixing element (4) arranged in the mixer housing (3) for mixing the components, having at least two separate inlet passages (5, 6) through which the components can be introduced into the region of the mixer element (4) separately from one another, wherein each inlet passage (5, 6) is designed for sealing cooperation with one respective outlet passage (84, 921) of a storage container (8) or of a chamber (91, 92) and wherein at least one of the inlet passages (5) is designed at its end intended for the cooperation with the outlet passage (84) as a piercing element (51) for opening a flow connection between the storage container (8) or the chamber (91, 92) and this inlet passage (5), **characterized in that** the piercing element (51) comprises at least two inflow surfaces (511, 512, 512', 513, 514, 515, 516, 54) for the component, wherein the two inflow surfaces (511, 512, 512', 513, 514, 515, 516, 54) are inclined relative to one another.

2. A mixer in accordance with claim 1, wherein the sum of all inflow areas (511, 512, 512', 513, 514, 515, 516, 54) of an inlet passage (5) is larger than the cross-sectional area of this inlet passage (5) perpendicular to its longitudinal axis (A).

3. A mixer in accordance with claim 1 or claim 2, wherein each inlet passage (5) which has a piercing element (51) is substantially designed as a cylindrical tube.

4. A mixer in accordance with any one of the preceding claims, wherein the piercing element (51) comprises at least one tip (521, 522, 523, 521', 522').

5. A mixer in accordance with any one of the preceding claims, wherein the two inflow surfaces (511, 512, 54, 515, 516) contact one another at a common connection line (C).

6. A mixer in accordance with any one of the claims 1 to 4, wherein the two inflow surfaces (511, 512') are separated by a bar (55).

7. A mixer in accordance with claim 6, wherein the bar (55) extends perpendicular to the longitudinal axis (A) of the inlet passage (5).

8. A mixer in accordance with one of the claims 6 or 7, wherein the bar (55) has at least one tip (523).

9. A mixer in accordance with any one of the preceding claims which is designed as a dynamic mixer having a rotatable mixing element (4).

10. A mixer in accordance with any one of the preceding claims, wherein precisely one inlet passage (5) has a piercing element (51).

11. A dispensing apparatus for dispensing at least two flowable components having a storage container (8) for receiving one respective chamber (91, 92) for each component, wherein the storage container (8) has at least one outlet passage (84) for one of the components as well as having a mixer (2) for mixing the components, **characterized in that** the mixer (2) is designed in accordance with any one of the preceding claims.

12. A dispensing apparatus in accordance with claim 11, wherein the storage container (8) has a shoulder part (83) which receives one respective end of each of the chambers (91, 92), wherein the at least one outlet passage (84) is provided at the shoulder part (83) and projects as a stub on the side of the shoulder part (83) remote from the chambers (91, 92), wherein the inlet passage (5) of the mixer (2) provided with the piercing element (51) engages into the at least one outlet passage (84) of the shoulder part and is dimensioned such that each piercing element (51) can penetrate up to a penetration depth (T) into the chamber (91) in the operating state.

13. A dispensing apparatus in accordance with claim 12, wherein the penetration depth (T) amounts to at most 50%, preferably at most 33%, of the inner extent of the inlet passage (D).

14. A dispensing apparatus in accordance with any one of the claims 11 to 13, wherein at least one chamber (91) is designed as a tubular bag whose wall can be pierced by the piercing element (51).

15. A dispensing apparatus in accordance with any one of the claims 11 to 14, having at least one piston (85) or having at least one plunger (85) for dispensing the components from the chambers.

## Revendications

1. Mélangeur pour mélanger au moins deux composants capables de s'écouler, comprenant un boîtier de mélangeur (3) qui comporte une ouverture de sortie (7) pour les composants, comprenant au moins un élément mélangeur (4) agencé dans le boîtier de mélangeur (3) pour mélanger de façon intime les composants, comprenant au moins deux canaux d'entrée séparés (5, 6) par lesquels les composants peuvent être introduits séparément les uns des autres dans la région de l'élément mélangeur (4), dans lequel chaque canal d'entrée (5 ; 6) est réalisé en vue de coopérer de façon étanche avec un canal de sortie respectif (84, 921) d'un récipient de réserve (8) ou d'une chambre (91, 92), et dans lequel l'un au moins des canaux d'entrée (5) est réalisé, à son extrémité destinée à coopérer avec le canal de sortie (84), sous forme d'élément perforateur (51) pour ouvrir une liaison d'écoulement entre le récipient de réserve (8) ou la chambre (91, 92) et ce canal d'entrée (5), **caractérisé en ce que** l'élément perforateur (51) comporte au moins deux surfaces d'écoulement incident (511, 512, 512', 513, 514, 515, 516, 54) pour les composants, et les deux surfaces d'écoulement incident (511, 512, 512', 513, 514, 515, 516, 54) sont inclinées l'une par rapport à l'autre.

2. Mélangeur selon la revendication 1, dans lequel la somme de toutes les surfaces d'écoulement incident (511, 512, 512', 513, 514, 515, 516, 54) d'un canal d'entrée (5) est plus grande que la surface de section transversale de ce canal d'entrée (5) perpendiculairement à son axe longitudinal (A).

3. Mélangeur selon la revendication 1 ou 2, dans lequel chaque canal d'entrée (5) qui comporte un élément perforateur (51) est réalisé sensiblement sous forme de tube cylindrique.

4. Mélangeur selon l'une des revendications précédentes, dans lequel l'élément perforateur (51) comprend au moins une pointe (521, 522, 523, 521', 522').

5. Mélangeur selon l'une des revendications précédentes, dans lequel les deux surfaces d'écoulement incident (511, 512, 54, 515, 516) se touchent au niveau d'une ligne de liaison commune (C).

6. Mélangeur selon l'une des revendications 1 à 4, dans lequel les deux surfaces d'écoulement incident (511, 512) sont séparées par une barrette (55).

7. Mélangeur selon la revendication 6, dans lequel la barrette (55) s'étend perpendiculairement à l'axe longitudinal (A) du canal d'entrée (5).

8. Mélangeur selon l'une des revendications 6 ou 7, dans lequel la barrette (55) présente au moins une pointe (523).

9. Mélangeur selon l'une des revendications précédentes, qui est conçu comme un mélangeur dynamique avec un élément mélangeur en rotation (4).

10. Mélangeur selon l'une des revendications précédentes, dans lequel exactement un canal d'entrée (5) comporte un élément perforateur (51).

11. Dispositif distributeur pour distribuer au moins deux composants capables s'écouler avec un récipient de réserve (8) pour loger respectivement une chambre (91, 92) pour chaque composant, dans lequel le récipient de réserve (8) comprend au moins un canal de sortie (84) pour l'un des composants, et comprenant un mélangeur (2) pour mélanger les composants, **caractérisé en ce que** le mélangeur (2) est réalisé conformément à l'une des revendications précédentes.

12. Dispositif distributeur selon la revendication 11, dans lequel le récipient de réserve (8) comprend une partie en épaulement (83), qui reçoit respectivement une extrémité des chambres (91, 92), dans lequel ledit au moins un canal de sortie (84) est prévu au niveau de la partie en épaulement (83) et dépasse sous forme de pipe sur le côté de la partie en épaulement (83) détourné des chambres (91, 92), dans lequel le canal d'entrée (5) du mélangeur (2) doté de l'élément perforateur (51) s'engage dans ledit au moins un canal de sortie (84) de la partie en épaulement et a des dimensions telles que chaque élément perforateur (51) est, dans l'état de fonctionnement, capable de pénétrer dans la chambre (91) jusqu'à une profondeur de pénétration (T).

13. Dispositif distributeur selon la revendication 12, dans lequel la profondeur de pénétration (T) s'élève au maximum à 50 %, de préférence au maximum à 33 % de l'extension intérieure du canal d'entrée (D).

14. Dispositif distributeur selon l'une des revendications 11 à 13, dans lequel au moins une chambre (91) est réalisée sous la forme d'une poche tubulaire, dont la paroi est susceptible d'être perforée par l'élément perforateur (51).

15. Dispositif distributeur selon l'une des revendications 11 à 14, comprenant au moins un piston (85) ou au moins un poussoir (85) pour distribuer les composants hors des chambres.
